# EUROPEAN PATENT APPLICATION

(11) **EP 1 925 794 A1**
(43) Date of publication of application: **28.05.2008**
(21) Application number: 07386025.6
(22) Date of filing: 07.11.2007
(51) Int. Cl.: F02B 37/10, F02B 39/04, F02B 39/08

(54) **Internal combustion engines turbochargers accelerators**

(30) Priority: 27.11.2006 GR 20060100639
(71) Applicant: Mastrokalos, Antonis, 84003 Sifnos (GR)
(72) Inventor: Mastrokalos, Antonis, 84003 Sifnos (GR)

(57) **Abstract**

Internal combustion engine, turbocharger accelerators, for the achievement of right proportion of air or fuel mixing aiming at the right combustion of this. The particular provisions are separated in two basic categories. The first category allocates servomechanism of acceleration entirely completed inside the body of unit, while the second has the mechanism outside of the unit and the special dutch (21) inside this. The servomechanism of the first category is in fact a hydraulic motor, speed controlled semi-independent from the shaft of blower (9) and turbine (48). The provisions of second category allocate mechanism of speed control (73), externally of the unit (92), which substantially is a system of continuous variable transmission speed of infinity ratio, planetary system, with parabolic cogwheels. And the two categories also allocate oil pump and oil accumulator (70) that according to another modification of invention can be replaced from the gravity that they have incorporated. These provisions find application in all types of gasoline and diesel engines.

## Description

This invention refers to the convenient of internal combustion engine turbochargers speed acceleration, and the reduction of time that is required, for the complete output of engine for each concrete rate of load, or the achievement of right proportion of excess air, and or air fuel mixing aiming at the right combustion of this.

It has application in all types and sizes, of gasoline and/or diesel engines.

It is offered in two basic categories: firstly with the servomechanism of acceleration completely built inside the body of turbocharger unit, and second with the acceleration mechanism outside of the unit and its special dutch inside, both of the provisions referred to the exhaust gas free flow turbochargers.

Characteristic of the first category is that, the servomechanism is hydraulic motor, speed controllable via proportional feed valve and will be involved via double coaxial type of movement stopper, which will be semi - independent from the axis of blower and from that of turbine. Thus, at the interventions of the hydraulic motor for achievement of acceleration, this will not have the additional load of turbine, thus and the blower will accelerate fast and unhinderedly, also the turbine without the load of blower it might more easily to accelerate and anticipate the rotational speed of blower. Except of the starting acceleration, it will also assist in the surpassing of fluctuating loads, after becomes the proportional comparison or control of parameters, for the right each benefit of scavenge air, until the phase of self-service.

Characteristic of the second category is that, the mechanism of speed control is located externally of the turbocharger unit; it is a system of continuous variable transmission speed of infinity ratio, planetary system, with parabolic cogwheels. This mechanism can take movement either fi-om crankshaft, even if it is found far off, because of the engine size and the avoidance of energy inactivities, from the camshaft, or by chain and or cogwheels. The checked rotary speed will be lent to the turbocharger via cogwheel which will be involved with what will be found on the axis of turbocharger, and will be connected with this with the same movement stoppers that are also used in the first category, as clutches. The shaft of turbocharger for the same reasons that were mentioned before will be also divided here.

Thus, are achieved: most optimal and without delays output of turbocharger, with no lags. And the unfavourable phenomena that are observed in the big Marine engines, of overheated and or cooling down the content of scavenge manifolds, or respectively falls the temperature of the engines body and liners, and lurk dangers of cracks, during of long waiting periods of implementation manoeuvring movement, with the continuous operation of auxiliary blowers, what are frequent phenomenon and inevitable, cease they exist, and are avoided also the pointless consumption of energy.

The hydraulic motor, of the first category, belongs in the category of vane or even these with blocked fins, for hydrostatic release of bearings and increase of working life and or elongation of inspections intervals. This is served by an oil pump. This one can be electrically driven, or even clutched and driven by the engine which it serves, and uses also the same engine oil. Of course the driven it serves only after the machine has been started. Therefore essential condition is the existence of electrically driven for the starting.

As such pump it can be the same main lubricating pump of engine with increased capacity in order to cover this benefit. Either or independent or driven it.

Well-aimed it will be also the use of oil accumulator for the starting or for the repetitive starting, in order to avoid the need of strong oil pump, at least in this phase, if the turbocharger is continuously activated from oil pump, then after the initial starting phase, it will be interfered some driven pump for further use.

Maybe a gravity tank plays also the role of accumulator, occasionally, (when are required repetitive starting), afterwards simply plays the usual role. The piston of accumulator will be equipped with a venting valve, for the usual destination and when is needed the use as accumulator then and only then it will dose automatically without any interventions simply because of place and prevention, and the tank will work as gravity.

Thus, they do not interfere bulky mechanical elements, which being in noisy perhaps operation with vibrations and frequent damages and need of frequent inspections. Also, the access in them is easy and is maintained the initial exterior form. And rather the volume of machine will be by far smaller because are absent the auxiliary blowers and the complex scavenging manifolds.

The service becomes with proportional servo valves. After becomes the starting - acceleration and comparison of parameters and the rotation speed of turbine exceed that of blower, then befall the automatic disengagement of side of movement stopper - dutch, that belongs in the hydraulic motor and automatically the continuation of rotation of blower, it is achieved henceforth via the movement that emanates and is lent in this via the thermic energy of turbine and its own side with its own of movement stopper - dutch, while the hydraulic motor is rendered inactive.

Both the movement stoppers, are one unit combining and the absolute attributes of ball bearings, and are found in bath of oil.

Thus are avoided the known problems that are created with the use of auxiliary blowers, also are avoided or do not suffer more problems that have electric motors with the repetitive stoppage - starting. Here simply the hydraulic motor can be immobilised via servo valve, or even work idling for some time interval critical until exceeds the situation of operation in other constant situations. In parallel, time is given the possibility if the blades and or nozzles etc, suffer damage or stacked, is not created problem of emergency stoppage of engine, for repair, specifically if enter also reasons of safety, or even other reasons, but the operation continues, with the continuous operation of servomechanism of acceleration, until it is found suitable time - space for repair, via possibility of exhaust gas deviation through a by pass manifold.

Also are simplified the systems of scavenge manifolds, do not need multiple chambers, neither non-retum valves nor all relevant. Except only from one non-retum, or proportional, for the initial starting, then that likely is created a palm wave and suffers damage fins of air coolers, via which will be passed a big air quantity until the standardisation of situation.

Thus is achieved operation of engine without delays of starting, correspondence, etc. increasing or decreasing the output performance with always checked the composition of fuel air mixing, inside minimal time, with decreased emissions and increased output performance with decreased consumption.

More characteristics of the invention and the arising advantages that emanate from it are characteristically described with the help of attached drawings.

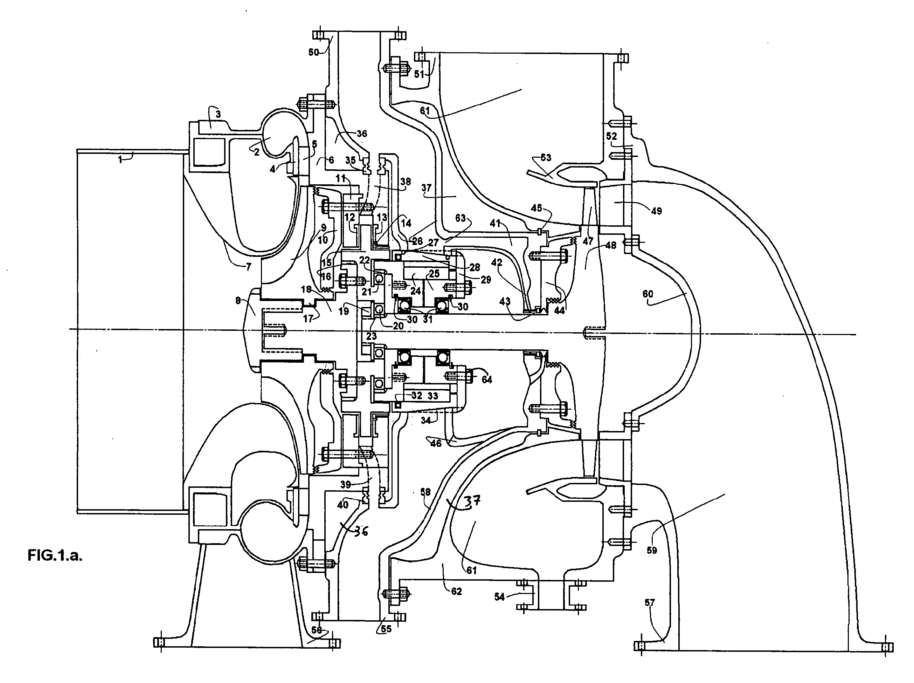

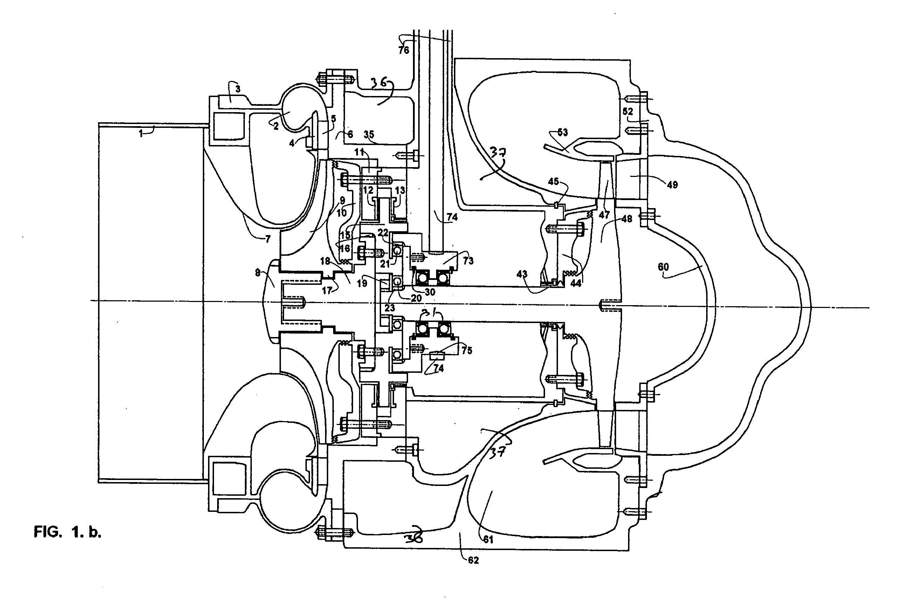

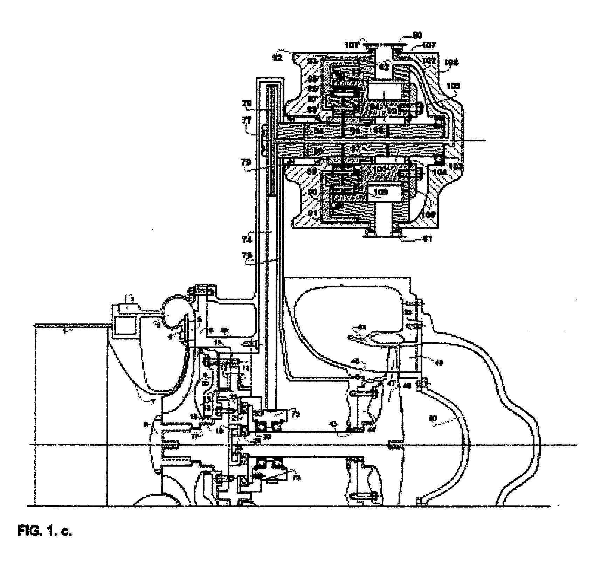

Figure 1.a presents in oblong section the composition of turbocharger, with incorporated in the interior entire the unit of acceleration.

They are revealed in with divided shaft for turbine and blower side, the common carrier of this dutches (movement stoppers), which also to his radial extension leads to ring which receives axial thrust, surrounded in front - behind from the rings of thrust bearings. Also shows the carrier or housing inside which is fixed the hydraulic motor and the configuration of channels of oil inlet and outlet of lubrication and cooling service. Here the leak-tightness labyrinths of exhaust gas, scavenge air and oil constitute a single pieces, for simplification of depiction, are not excluded however also for such small manufacture units, however for big and for reasons of facilitation of transports of material and for subject of expenses, should they are as usually different pieces, or divided type.

Figure 2.a presents department of carrier of clutches, in front view, and the way that the movement stoppers (overrunning clutcher) are adapted in the carrier.

Figure 3.a shows in front view, the way that the hydraulic motor enters in its final place inside the unit, ensuring simultaneously and the dissuasion of twist without need of other fixing elements, as extensions, bolts and nuts.

Figure 4.a presents a formal provision of hydraulic service of accelerator motor.

Figure 1.b presents in ground plan one from the likely ways of acceleration of turbocharger, with use of cogwheel and chain, instead of hydraulic motor inside the unit. The speed of cogwheel and thereof of unit, are controlled via a system of continuous variable transmission speed of infinity ratio, planetary, which receives commands from the system of engine speed control, and regulates the acceleration simultaneously with the opening of pumps, if it is diesel engine, or with the throttle if it is gasoline engine.

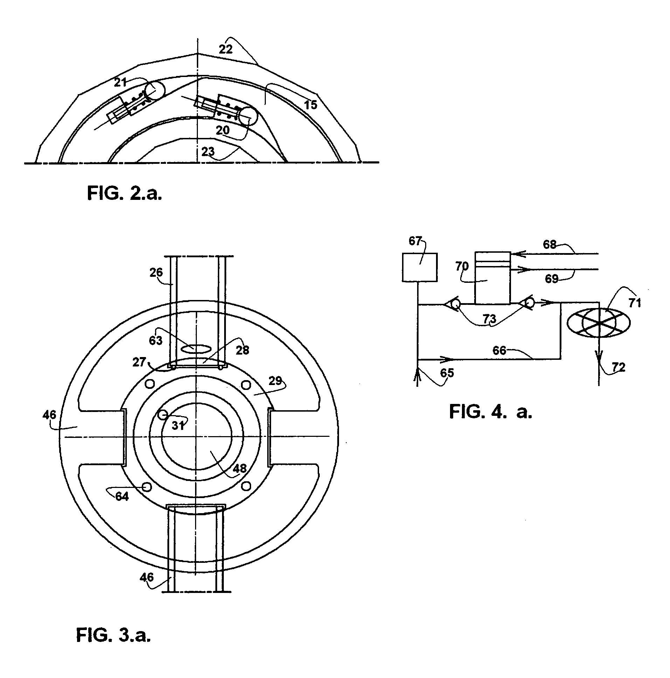

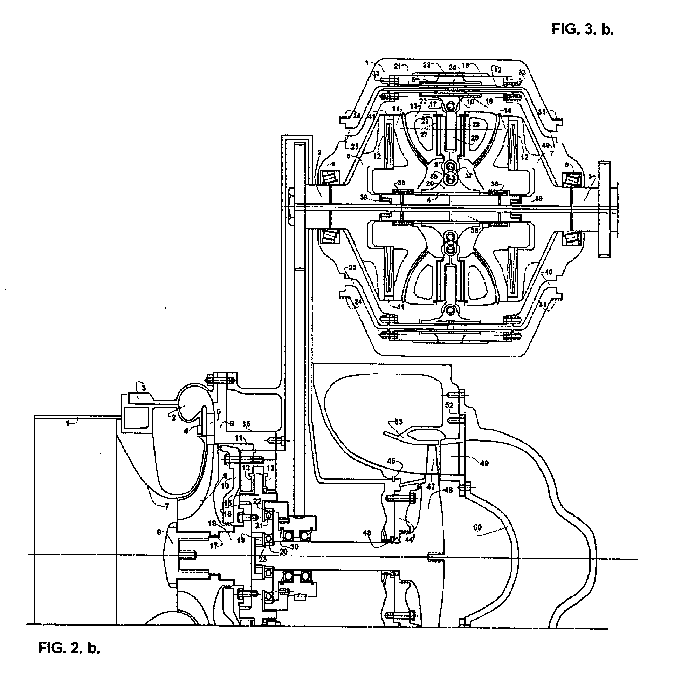

Figure 2.b in combination with the 3. b., show one from the second categories of amays, where the servomechanism of control of lent acceleration, is outside from the mainly body of turbocharger, and is a system of continuous variable transmission speed of infinity ratio, with parabolic cogwheels. The controlled rotary movement is transported to the turbocharger with chain. The turbocharger is provided with the double dutch, which a portion is for blower service and the other for turbine side.

Figure 1.c. It shows a other provision of second category, where as servomechanism, it exists a usual planetary system, which inside the ring shell includes a hydraulic motor, not also excluded the electric motor, which the rotary movement is controlled by proportional servo valve. The exit from the sun gear is transported to the turbocharger, with chain, they not excluded also case of cogwheel.

### Detailed description of figures of the invention

### Figure1. a.

It presents in oblong section the composition of turbocharger, with incorporated in the interior entire the unit of acceleration. Here the (1) it is the filter of air inlet that surrounds also the noise silent. The (57) it is the flange of inlet of the exhaust gas in the turbine. The (56) it is diffuse the charged air to the air cooler. The (61) it is the booth of coming out exhaust from the turbine, led to atmosphere. The unit of acceleration works and attributes as follows. The oil which apart from the basic aim of lubricating and cooling serves also the activation of hydraulic motor enters from the pipe with flange (50). Thence it rolls to the upper part of hydraulic motor housing (28) which the ending of it comes in contact with the engine with a small angle assisted by synthetic oil seal ring (27). The shaped angle in the face of pipe and in the motor housing has the purpose of aiming the easy assembly - disassembly, with the parallel possibility of automatic fixing and reject of other additional elements of fixing. The oil henceforth has usually reached in the motor of blade type, as it appears here in the figure, and will force in rotation the rotor (25), on this body are exist the blades (24). After it turns him it will come out from the opening (34), which for the same aim as it was mentioned before shapes also this angle for the easy assembly - disassembly. The rotor turning transports the movement no via central axis, but via a ring or roll of his circumference, which has been shaped in his extreme internal department in polygonal form (22), as respectively and the abroad of ring of dutch (21). This polygonal aim it has the solid and easy adaptation of rotor with the outside dutch of movement stopper (21), which is fixed on the clutches carrier (15). The hydraulic rotor based on the shaft of turbine (48) with two bearings (31), which are secured in their place by the help of two circle dip (30, 30). Farther more for prevention of oil leakages between the motor rotor and the motor housing (25, 28) is placed an oil seal ring (32). The other side of motor doses with the use of lid (29) by bolts. The body of the rotor (25) and lateral of motor housing (28) have channels way for oil passage for the internal lubrication of the working of surfaces. If now we are in the phase that turbocharger has need of help for acceleration, or starting, then after the hydraulic motor begins turns, his rotary movement has been transported up to the dutches carrier, as was explained before. In the other side of this carrier that is opposite found by that of clutches, she is fixed winged the turbocharger - blower (9), thus this is turn with so much revolution those who has ordered attributes the hydraulic motor for the particular load or situation of engine. Thence the compressed air is led via the drivers of fins (5) and ring (4) to spiral diffuser (2) leading from central (56) to the air cooler. The element (7) is the driver crucible of entering air to blower. The crucible enters and shapes with exterior housing (3) the spiral diffuser (2). The blower it is fixed on it's shaft via drivers of ledges (17) with the help of nut (8), and with a line bolts they are connected then to the dutches carrier(15). For facilitation of shaft inlet to the carrier exists a polygonal configuration for both (16), in their internal and exterior circumference. The carrier extend radial, shaping a cross. His one side, or arm as it was described, constitute the nest of inlet - fixing of blower shaft, the other side or arm it shapes ring or cylinder for it's foundation on the bearing (14). The upper part of cross or dutches carrier (15), constitutes a tale ring, where in both sides of her are placed the rings of receipt of axial thrust of the blower and the turbine side (12, 13). The thrust rings (12) is bigger than ring (11), that is fixed on body (6) constitutes the element, on which is fixed the exterior housing of diffuser (3) and from the internal the body of the element which it and so on produces the oil to the hydraulic motor and other points of lubrication. The other thrust ring is fixed directly on the element (6) in the other side. Also on the of element (6) with the adaptor (11) of the thrust ring (12), is adapted by use of bolts the body (10), which to the centre and to the circumference region brings labyrinths rings for oil and air isolation. In big units naturally for obvious reasons each labyrinth circumference - central constitute separate pieces. The oil after it is imported by the pipe - flange (50) apart from the main benefit service of hydraulic motor, via ramification (38) and metal-flexible ring with diminution of his diameter in the exit - orifice (35) enters in the region of lubrication bearing and rings of thrust receipts. The oil after it executes this destination comes out from the down side from passage (39) via again metal-plastic ring without restriction of diameter (40). Also the oil before of it is inlet to the hydraulic motor going by deviation of opening (63) and space that is created inside the piping shape body of fixing of motor, is going for the lubrication of bearing side of the turbine (43), and comes out from the down part and via the opening (46) that exists in the body of the piping shape adaptor of hydraulic motor and extension of this (58) is going to the final exit, via the abductor pipe with flange (55). The departments of pipes (50, 55,) and the interior, are shaped in big circular flanges, so that they can be fixed on the circular also conclusions of body of ring (6) and on the other hand to the circumference of booth (61) inside which they come out the exhaust gas after they pass from the turbine before left to exhaust manifold. If also after has been achieved starting of the blower (9), with the way that has explained, in him possess will take place the combustion inside the cylinders and the exhaust will be led to the booth of entry the turbine (57, 59). These will passing through the nozzles (49) and with their thermal content passing through the turbine's blades (47) will begin to turn the turbine (48). Because of the possibility that is provided by the double dutch, at the initial starting of blower, this without it transports the inertia load of mass of the turbine, it is accelerated more easily, and from the other hand the turbine, for the same reason, until now she is not conjugated with blower for the himself, and because of missing of back pressure, the inertia load is also small, is accelerated more easily and faster. Result minimizing of time for achievement the good performance of unit, with the right or desirable proportion, or air mixing, the well controlled combustion with the better quality of coming out exhaust. After her turbine it is accelerated so much in order that its rotation speed exceeds this of blower, then as is explained and appears better in the front view of system of dutches in figure 2.a., the sector of the blower dutch (21) disengages leaving henceforth the load in the dutch (20) that belongs to turbine (48). The side (23) of the internal ring of the turbine dutch (20) for facility of adaptation or inspections, is shaped in polygon form, as she is also corresponding the extreme department of turbine shaft. The fixing of the clutches carrier on the shaft becomes with use of one nut (19). Consequently if for anyone reason it is also desirable the increase of revolutions of engine, intervenes the accelerator for simultaneous or at few premature acceleration of turbocharger, avoided the thus phenomenon turbo lag. In the figure it is appeared also the declined driver channel (53) of the exhaust gases afterwards the attribution of work in turbine. Also is visible the ring (44) which has shaped his circumference and his centre in labyrinths of leak-tightness of exhaust and oil. And in front off the forehead turbine, it exists the protective or driver cover (60). In the down part of booth of exhaust gases (61) exists the pipe (54) for the outlet of washing products from the unit. The region (36) and (37) all around the pipe shaping adaptor hydraulic motor is offered for placement of insulation materials for protection of the oil and the environment space, from overheat. The element (45) is a metal ring - spring for fixing of pipe shape adaptor and guaranty of escape or entry of exhaust gases to the space of insulations. The (52) shows the flange of fixing of incoming exhaust gases manifold (59), in the body of unit, or on the booth of exhaust (62).

### Figure 2. a.

It presents in front view the details of system of double clutches, and the way that the movement stoppers (overrunning clutcher) are adapted in the carrier. Thus if the applied rotary movement from the shaft of turbine side, on the loading balls (20), via the polygon of fixing (23) of the side of the turbine dutch, it exceeds this where is tended by the side of the rotor on the loading balls (21), via the polygon of fixing (22) the side of rotor, then automatically the movement it is transported in the balls or dutch of the turbine side, which consecutively it is transported by the common carrier of these in blower, without no other intermediary mechanic element and the rotary movement it continues smoothly, without problems of delays in every engine's requirements.

### Figure 3.a.

It shows in front view, with who way the hydraulic motor and specifically the body of this (28), enters in his final place inside the pipe adaptor, specifically shaped in the particular length of unit with oil inlet (26) and outlet (46) from the unit, in form of cross, ensuring simultaneously and the dissuasion twist by his place, without need of other fixing elements, as extensions, soles and nuts. It shows also the elliptical opening (63) on the pipe of inlet (26), from which the lubricating oil reaches in the turbine side bearing. Is presented also the synthetic oil seal ring (27) oil leakages safeguarding of motor activating oil. Unmistakable also they are the openings or notches that exist in the body of motor housing (29) that facilitates simply the initial passage of this for fixing on the body of motor (28), via bolts that they passed through moreover from apertures (64).

### Figure 4. a.

It presents a formal provision of hydraulic service of one unit of turbocharger, for big engines as are the marine types. The oil via the main pipe (65) and deviation (66) is led to the turbocharger. Here the (67) shows a gravity tank or oil accumulator that is interfered in the system for case of damage of lubricating pump which is responsible for the lubrication of the unit and the operation of it's hydraulic motor. The (70) shows piston type accumulator, where the spring or better his activator is compressed air that is offered from network of service. The oil passing through permanently from this coming out pipe of returns or overflow (69) and thus is maintained its temperature inside operation limits. Before and afterwards of this accumulator exist also non-retum valves (73). The oil enters in the unit of turbocharger (71) and comes out from the (72). The use of oil accumulator, needs for the starting or for the repetitive starting, in order to avoid big power oil pump, at least in this phase, if the accelerator of turbocharger is as here continuously activated from oil pump, then afterwards the initial phase of starting, interferes somebody driven pump for farther use. The cylinder of accumulator is equipped with a non return valve, for the usual destination and when needs the use as saver then and only then doses this automatically without interventions simply because of place and prevention, and works as moreover reservoir of gravity tank.

### Figure 1.b.

It presents in ground plan one from the likely ways of turbocharger acceleration, with chain use, instead of hydraulic motor inside the unit. The elements that are presented in this provision, with regard to as generally speaking the unit, except the system of supplement of acceleration and the fixing adaptor this in relation with interior accelerator, are facsimiled with those of previous form, with the same nomenclature and operation. The system of clutches carrier and clutches are the same also. The difference lies in the recipient of acceleration inside unit (73). This has in the circumference the sprocket wheel (75) and receives the movement via chain (74). This chain passing inside the mainly body of turbocharger via the region that is shaped in housing (76). The recipient is seated on the turbine shaft, with two ball bearings (31), which is locked in their place with the circle clips (30). This region is found inside the oil chamber shaped from the pipe adaptor. At least the way of operation of - intervention is the same as described in the explanation of form 1. a.

### Figure 2. b. and figure 3. b.

This shows in diminution and partial ground plan the turbocharger Figure 2. b., with the adjacent unit, of acceleration control Figure 3. b., which is planetary it is a system of continuous variable transmission speed of infinity ratio, with parabolic cogwheels. The apparent elements of unit of turbocharger on the nomenclature and operation have as they were explained in the description of Figure 1. b. The unit of acceleration is a planetary system of continuous variable transmission speed of infinity ratio, with parabolic cogwheels. This mechanism can take movement or from crankshaft, even if he is found far off, because of machine size, and avoidance of energy in activities, from the camshaft, or with chain or with cogwheels. The controlled rotary speed is lent to mechanism (73) turbocharger via sprocket wheel (75) and chain (74). The mechanism of receipt (73) is located on the divided type of shaft of turbocharger, and to the side of turbine (48) and is involved with the unit of the same movement stoppers that are also used in the first category, as clutches. The other difference that you meet here is the existence of dosed space inside which is encompassed the chain and sprocket wheel for the needs of lubrication. The mechanism of acceleration and speed control is characterised by the existence of two hydraulic cylinders (9) of double acting, placed in extension at the signficance axes of planets (13), on the region of housing of his unit. On the body of these cylinders in sticking out reception of pin (17) is fixed the end of double coaxial slipping shaft of planets (28, 29). The other end of shaft is fixed in the pin (9) the arm (37), which other arm with utmost is fixed to him in ring (20). And this with his line in free rotation shaft (38). Particular characteristic of the double energy hydraulic cylinders it is that: they are not moved the both sides existed piston rod, but because these are calking on the housing of unit, are moved the housing of cylinders, to the ordered direction either left or right. Because in the body of cylinders with the pin (37) are fixed the planets shaft (13), with the each right or left locomotion of body of cylinders (9) is right achieved the change of fixing angle or rotation of planets, with result the change of relation. The inlet or return of control oil is reversible, via control of servo valves, and the openings (25, 40) that exists on the two sides of housing, that is to say side of entry of movement and side of outlet of sprocket wheel (3, 2) with the help of pipe thread union (24, 31) that is not also essential to be pipe thread union it can be also flange type. The piston rod (18), of the double acting hydraulic cylinders (9) has in the middle of this length plug (10), for segregation of these sides. Moreover for the better withholding of hydraulic cylinders in their place without side movements and likely loss of precise control of relation, against the side of fixing pins of these planets department of cylinders has shaped a ledge tail (22), which is slip inside suitable groove or slot (19).

### Figure 1. c.

This is a variant of provision of figure 2. b. and 3. b. That is to say an other way of achievement of acceleration of turbocharger, with the mechanism outside of the main unit of this. Here the accelerator is a conventional planetary system. But inside his ring is located a hydraulic motor, speed controlled with proportional servo valve. Not excluded and the electric motor. Thus the turns multiplied at the ratio of planetary system do not always have need and so much high speed hydraulic motor for service of system. Here appears again the recipient of acceleration inside the unit of turbocharger (73). With the sprocket wheel (75) in his region and it receives the movement via chain (74). This chain passing through inside the mainly body of turbocharger via the region that is shaped in housing (76). The unit of achievement of acceleration, that is presented and this in longitudinal view, is found adjacent the turbocharger. This is activated by use of hydraulic motor, in which the operation and his lubrication oil enters from pipe (80), and comes out from the unit after it carries out his destination, from pipe (81). The oil after it enters from the housing of hydraulic motor (82), via the blades (84), which are found inside the notches of the rotor (83) which constitute at the same time also the ring of the planetary system with configuration of cogwheel in involved side (86), creates the rotary movement The movement via the involved cogwheels of planets (87) is then transported to the cogwheels of sun gear of unit (95). For simplification of the figure, are not presented here the springs of reservation of blades in contact with the region of moor housing. To avoid the oil leakages between the rotor circumference and his housing appears existence of one oil seal (90). The rotor is seated in the centre on the shaft of sun gear (100), with needle bearings (99), not excluded also use of other type, which is retained in his place by use of circle dip (104). In opposite the cogwheel ring side of motor, in order to doses this and retained from sure in their place the blades (84), exist annular cover (106) which are fixed in place by nuts (105), on free utmost of the rotor. The planetary planet carrier (85), with its cover (109), is fixed in one side of housing of unit (92), as moreover it is fixed and the other side of the housing of hydraulic motor (82). The other half of the rotor housing is fixed in the other half the housing of unit (108). For the fixing in all cases are used ledges and grooves in the connected departments ((93, 107). The received movement from the sun gear shaft (100), via the sprocket wheel (78), and chain (74), is controlled transported to the recipient of movement of turbocharger (73). The sprocket wheel (78) is retained on the fuselage of the sun gear via the nut (77). The sun gear shaft (100) is seated on the needle bearing (94), which is retained in his place by the means of circle dip (79), and with the ball bearing (103) in free utmost his on the reception of nutshell of unit (108). On the same department of housing exists internal channel (102), via which goes through the oil in order to it enters from opening that exists in free utmost the of sun gear shaft, and distributors for the lubrication of various bearings. The cogwheel of sun gear is retained against twist on his shaft, with the help of key (96), and tightens with the nut (98). In standard loads or turns, if is not necessary the unit of acceleration, for subject of energy reduction it is possible to immobilised, and restart in first demand.

## Claims

1. Internal combustion engines, turbochargers accelerators **characterised** from the fact that the required reduction of time is achieved for the complete performance of unit for each definite rate of load, or the achievement of right proportion of air mixing, or fuel mixing aiming at the right combustion of this find application in all types of gasoline and diesel engines.

2. Internal combustion engines, turbochargers accelerators according to claim 1, **characterised** from the fact that they are separated in two basic categories the one with the servomechanism of acceleration integrally completed inside the body of unit and the other with the mechanism outside of the unit and with special dutch (21) inside this.

3. Internal combustion engines, turbochargers accelerators, according to claim 2, **characterised** from the fact that the first category allocates servomechanism that is practical a hydraulic motor, speed controllable via proportional valve of feed and is involved via double coaxial type of movement stopper, which is semi-independent from the axis of blower (9) and that of turbine (48), allowing in blower (9) to accelerates fast and free but also allowing the turbine (48) to accelerates more easily, without the load of blower (9), and consequently anticipates his rotation speed.

4. Internal combustion engines, turbochargers accelerators, according to claim 3, **characterised** from the fact that the hydraulic motor that allocates belongs in the category of the blade and / or these with blocked fins, for hydrostatic release of bearings and increase of working life or elongation of intervals of inspections.

5. Internal combustion engines, turbochargers accelerators, according to claim 3, **characterised** from the fact that they allocate oil pump, electrically driven or driven from the engine which is also served, they also allocate oil accumulator (70) for the starting or for the repetitive starting, so that it is not necessity for big power oil pump.

6. Internal combustion engines, turbochargers accelerators, according to claim 3, **characterised** from the fact that they allocate a gravity tank that plays occasionally the role of accumulator and allocates a relief valve that allows the use of tank and as accumulator whenever it is needed, it contributes in this way in the reduction of bulky mechanical elements as well as the noisy operation.

7. Internal combustion engines, turbochargers accelerators, according to claim 2, **characterised** from the fact that the second category allocates speed control mechanism (73) that is found externally of the unit (92), the mechanism is a system of continuous variable transmission speed of infinity ratio, planetary system, with parabolic cogwheels, that transmit the movement either from crankshaft or if it is located far off, with chain or with cogwheels.
